# EUROPEAN PATENT APPLICATION

(11) **EP 3 693 684 A1**
(43) Date of publication of application: **12.08.2020**
(21) Application number: 19305139.8
(22) Date of filing: 05.02.2019
(51) Int. Cl.: F25B 31/00

(54) **SEPARATOR AND METHOD FOR SEPARATING LUBRICANT FROM LUBRICANT-CHARGED GASEOUS REFRIGERANT**

(71) Applicant: Carrier Corporation, Palm Beach Gardens, FL 33418 (US)
(72) Inventor: BERRICHON, Jean-Damien, 01120 MONTLUEL (FR); CHANON, Jean-Pierre, 01120 MONTLUEL (FR); BERNARD, Eric, 01120 MONTLUEL (FR)
(74) Representative: Lavoix

(57) **Abstract**

A separator (3), comprising: a housing (14); an inlet conduit (10), for admitting a flow (F1) of lubricant-charged gaseous refrigerant; a primary separation stage (31), configured for coarse separation of lubricant; a secondary separation stage (32), configured for fine separation of lubricant; a lubricant outlet conduit (11), for discharging lubricant; and a refrigerant outlet conduit (12), for discharging purified gaseous refrigerant.

## Description

The present invention concerns a separator and a method for separating lubricant from lubricant-charged gaseous refrigerant, as well as a refrigeration system comprising said separator.

The present invention is related to the domain of separating a lubricant, such as oil, from a refrigerant in gaseous form, in particular for a refrigeration system.

A typical known oil separator comprises a cylindrical horizontal housing and an inlet for admitting a mixture of oil and refrigerant into the housing, said mixture being discharged from a compressor of a refrigeration system. The housing comprises a mesh eliminator for removing oil from the mixture before discharging the separated refrigerant and oil at respective outlets of the housing. The discharged refrigerant is introduced into the condenser, while the separated oil is reintroduced into the compressor.

One of the aims of the invention is to provide a new separator that is more efficient for separating lubricant from lubricant-charged gaseous refrigerant that has a high concentration of lubricant.

For this purpose, an object of the invention is a separator, for separating lubricant from lubricant-charged gaseous refrigerant, the separator comprising:
- a housing;
- an inlet conduit, for admitting a flow of lubricant-charged gaseous refrigerant within the housing, the inlet conduit being coaxial to an inlet axis;
- a primary separation stage, positioned within the housing and configured for coarse separation of lubricant from the lubricant-charged gaseous refrigerant admitted at the inlet conduit;
- a secondary separation stage, positioned within the housing and configured for fine separation of lubricant from the lubricant-charged refrigerant discharged from the primary separation stage, a lubricant outlet conduit, for discharging lubricant separated from the admitted lubricant-charged gaseous refrigerant; and
- a refrigerant outlet conduit, for discharging purified gaseous refrigerant from the housing, the purified gaseous refrigerant being obtained by separation of lubricant from the lubricant-charged gaseous refrigerant by means of the primary separation stage and the secondary separation stage, the refrigerant outlet conduit being coaxial to an outlet axis.

In the invention, the primary separation stage ensures that the biggest droplets are removed from the lubricant-charged gaseous refrigerant before entering the secondary separation stage, thus allowing a more efficient use of the secondary separation stage, only dedicated to separation of smaller droplets. Thus, the secondary separation stage is more efficient and may be designed as more compact.

Further optional features of the invention are defined below:
- the secondary separation stage comprises a demister, in particular a demister mesh pad;
- the separator comprises an outlet diverter, interposed between the secondary separation stage and the refrigerant outlet conduit, imparting that at least a part of the lubricant-charged gaseous refrigerant discharged from the secondary separation stage has to circumvent said outlet diverter for being admitted into the refrigerant outlet conduit;
- the secondary separation stage comprises an inlet side, for admitting the flow of lubricant-charged gaseous refrigerant, and an outlet side, for discharging the flow of lubricant-charged gaseous refrigerant, the inlet side and the outlet side being crossed by a secondary axis perpendicular to the outlet axis ; and the outlet diverter comprises an outlet transversal plate, oriented perpendicular to the secondary axis and preferably parallel to the outlet axis, the outlet transversal plate comprising: a first attachment edge, in matching contact with the housing, and a first free edge, the first free edge and the housing defining a first passage section for the circumventing part of the flow of lubricant-charged gaseous refrigerant, leading to the refrigerant outlet conduit;
- the surface of the first passage section is larger than the surface of the outlet transversal plate;
- the outlet transversal plate comprises a plurality of through-holes distributed over the surface of the outlet transversal plate, each through-hole being configured for being crossed by the flow of gaseous refrigerant;
- the outlet transversal plate comprises a first aperture, positioned at the first attachment edge;
- the primary separation stage comprises an inlet diverter interposed between the inlet conduit and the secondary separation stage, imparting that at least a part of the flow of lubricant-charged gaseous refrigerant discharged from the inlet conduit has to circumvent said inlet diverter for being admitted into the secondary separation stage;
- the inlet diverter comprises an inlet transversal plate positioned proximate to the inlet conduit, the inlet transversal plate being perpendicular to the inlet axis and being crossed by the inlet axis, the inlet transversal plate comprising: a second attachment edge, in matching contact with the housing, and a second free edge, the second free edge and the housing defining a second passage section for the circumventing part of the flow of lubricant-charged gaseous refrigerant, leading to the secondary separation stage;
- the inlet transversal plate comprises a second aperture, positioned at the second attachment edge;
- the inlet diverter preferably comprises radial arms parallel to the inlet transversal plate and connecting the second free edge to the housing;
- In the separator:
   ∘ the housing defines a housing axis, and comprises an axially-extending sidewall extending parallel to the housing axis, a first end wall and a second end wall, both crossed by the housing axis, the sidewall comprising an upper portion, connecting the first end wall to the second end wall, and a lower portion, connecting the first end wall to the second end wall,
   ∘ the inlet conduit is positioned through the first end wall, the inlet axis being coaxial with the housing axis,
   ∘ the refrigerant outlet conduit is positioned proximate to the second end wall, through the upper portion, the outlet axis being perpendicular with the housing axis,
   ∘ the lubricant outlet conduit is positioned through the sidewall of the housing,
   ∘ the primary separation stage is axially interposed between the inlet conduit and the secondary separation stage, and
   ∘ the secondary separation stage is axially interposed between the primary separation stage and the refrigerant outlet conduit;
- the outlet diverter is axially interposed between the secondary separation stage and the refrigerant outlet conduit;
- the first attachment edge is in matching contact with the upper portion of the sidewall, and the first free edge is positioned between the upper portion of the sidewall and the housing axis;
- the separator comprises a first longitudinal separation grid, connecting the secondary separation stage to the second end wall and separating the upper portion from the lower portion of the sidewall, between the secondary separation stage and the second end wall;
- the separator comprises a second longitudinal separation grid, connecting the secondary separation stage to the first end wall and separating the upper portion from the lower portion of the sidewall, between the secondary separation stage and the first end wall.

Another object of the invention is a refrigeration system, comprising :
- the separator as defined above;
- a compressor, which is:
   ∘ connected to the inlet conduit of the separator and providing said inlet conduit with the flow of lubricant-charged gaseous refrigerant,
   ∘ connected to the lubricant outlet conduit of the separator for receiving lubricant separated from the lubricant-charged gaseous refrigerant,
- a condenser, which is connected to the refrigerant outlet conduit of the separator for receiving the purified gaseous refrigerant discharged from the separator.

Another object of the invention is a method for separating lubricant from lubricant-charged gaseous refrigerant. The method includes the following steps of:
- admitting a flow of lubricant-charged gaseous refrigerant within the housing of the separator as defined above, through the inlet conduit thereof;
- obtaining purified gaseous refrigerant and separated lubricant, by separating lubricant from the lubricant-charged gaseous refrigerant by means of the primary separation stage and the secondary separation stage;
- discharging said purified gaseous refrigerant from the housing through the refrigerant outlet conduit of the separator; and
- discharging said lubricant separated from the admitted lubricant-charged gaseous refrigerant.

Preferably, the method includes a further step of, by means of the outlet diverter of the separator, imparting that at least a part of the lubricant-charged gaseous refrigerant discharged from the secondary separation stage circumvents said outlet diverter for being admitted into the refrigerant outlet conduit.

In the drawings:
- figure 1 is a hybrid view of a refrigeration system according to a first embodiment of the invention, including a separator shown in longitudinal cross-section, while other components of the refrigeration system are shown in diagrammatic view;
- figure 2 is a perspective view of the separator of figure 1, without a sidewall thereof;
- figure 3 is a perspective view of a first part of the separator of figures 1 and 2;
- figure 4 is a perspective view, under another angle, of the first part of the separator of figure 3;
- figure 5 is a transverse cross-section along line V-V shown in figure 1;
- figure 6 is a schematic view of a separator according to a second embodiment of the invention;
- figure 7 is a schematic view of a separator according to a third embodiment of the invention;
- figure 8 is a schematic view of a separator according to a fourth embodiment of the invention; and
- figure 9 is a schematic view of a separator according to a fifth embodiment.

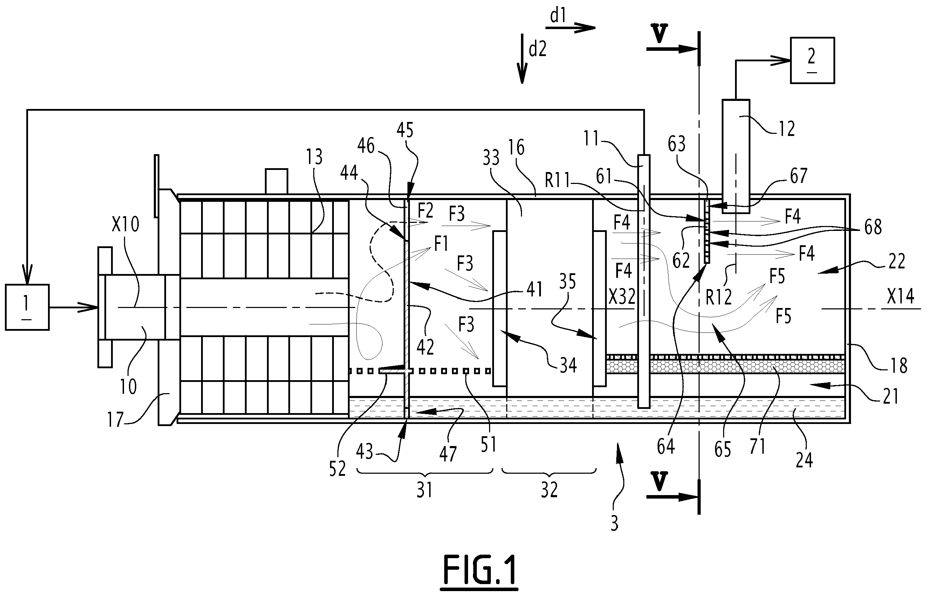

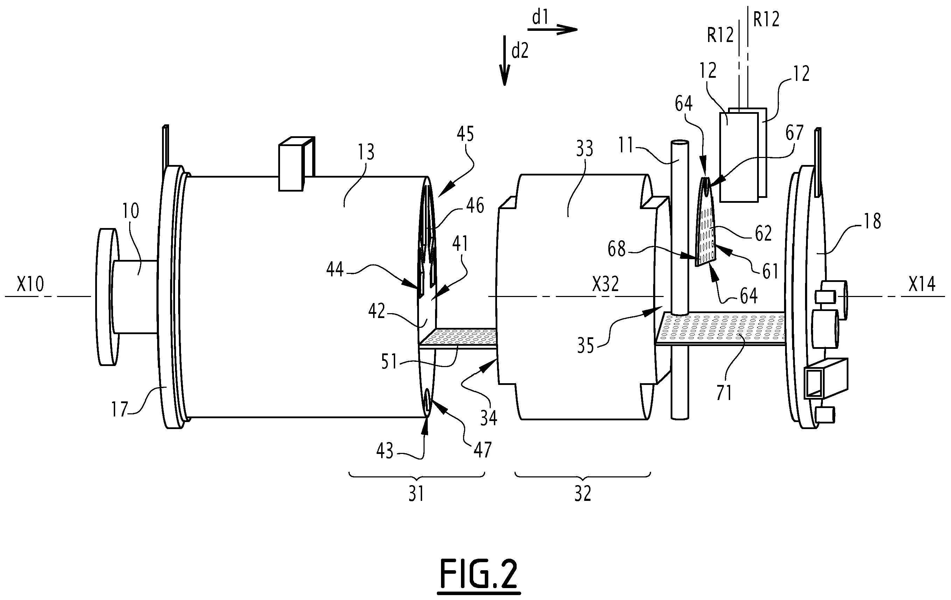

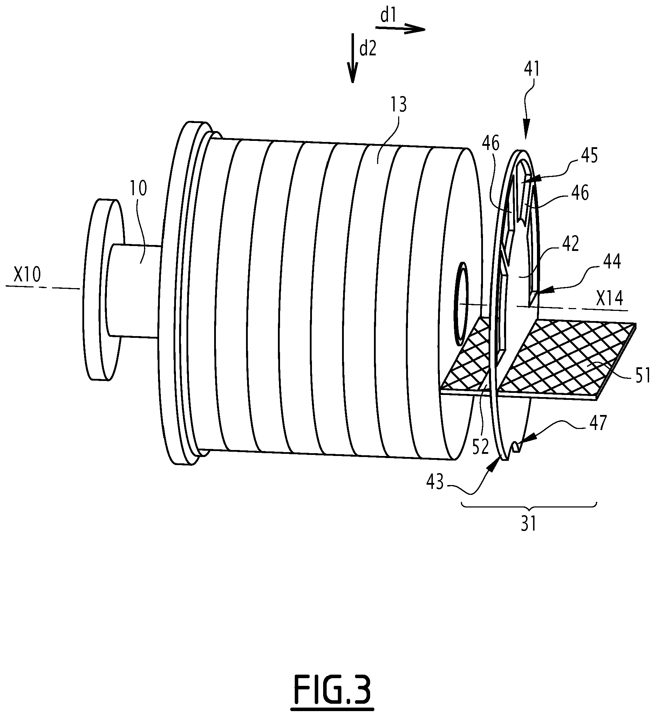

Figure 1 shows a refrigeration system according to a first embodiment of the invention, including a separator 3, also shown in figures 2-5.

The separator 3 is configured for separating lubricant from lubricant-charged gaseous refrigerant. For example, the lubricant comprises oil. For example, the refrigerant may comprise R134a. In the lubricant-charged gaseous refrigerant, le lubricant forms small droplets of different sizes, transported in the gaseous phase formed by the refrigerant.

The gaseous refrigerant is involved in a refrigerating thermodynamic cycle of the refrigeration system, preferably configured for air conditioning of a building or the like. In a manner known per se, the refrigeration system may include a compressor 1, a condenser 2, an expansion valve and an evaporator. The compressor 1 and the condenser 2 are shown in figure 1 in a diagrammatic form, while the expansion valve and the evaporator are not shown. The refrigeration system comprises a refrigerant circuit, forming a loop, and connecting the compressor 1, condenser 2, expansion valve and evaporator together in this order, so that the refrigerant circulates through the compressor 1, then the condenser 2, then the expansion valve, then the evaporator, and then the compressor again, etc. The separator 3 is also integrated to the refrigerant circuit, being fluidly connected between the compressor 1 and the condenser 2, as shown in figure 1.

The lubricant contained in the lubricant-charged refrigerant is lubricant used for lubrication of the compressor 1, said lubricant being incidentally mixed with the refrigerant in the process of compressing the refrigerant by the compressor 1. One purpose of the separator 3 is to extract most of the lubricant from the lubricant-charged refrigerant for reintroducing said lubricant into the compressor 1 for lubrication, and also to provide the condenser 2 with purified gaseous refrigerant, i.e. refrigerant that contains less or no lubricant. The cleaned gaseous refrigerant is condensed by the condenser 2.

The lubricant-charged gaseous refrigerant is emitted in the form of a gaseous flow, under pressure, by the compressor 1. The separator 3 comprises an inlet conduit 10 for admitting said flow within the separator 3. For this purpose, the compressor 1 is fluidly connected to the inlet conduit 10. The separator 3 also comprises a lubricant outlet conduit 11 for discharging lubricant separated from the admitted lubricant-charged gaseous refrigerant. Said lubricant outlet conduit 11 is fluidly connected to a lubrication circuit of the compressor 1, so that the lubricant retrieved by the separator is reintroduced therein.

The separator 3 also comprises a refrigerant outlet conduit 12, fluidly connected to the condenser 2, for discharging the purified gaseous refrigerant from the separator 3 and feeding said condenser 2 with said purified refrigerant.

The separator 3 comprises a housing 14. The housing 14 defines a housing axis X14, and comprises an axially-extending sidewall 16, extending parallel to the axis X14.

In the present document, the expressions like "radial" and "axial" refer to axis X14, unless otherwise mentioned.

The separator 3 is configured to be used with axis X14 being horizontal. The sidewall 16 is preferably of annular section centered on the axis X14. The housing 14 also comprises a first end wall 17 and a second end wall 18, both crossed by the housing axis X9. The end walls 17 and 18 are preferably orthogonal and centered on the axis X14. The first end wall 17 closes a first axial end of the sidewall 16, the second end wall 18 closes the other axial end of the sidewall 16.

The sidewall 16 comprises an upper portion 22 which connects the first end wall 17 to the second end wall 18, and comprises a lower portion 21 which connects the first end wall 17 to the second end wall 18. In use of the separator 3, the portion 21 is positioned at the bottom while the upper portion 22 is positioned at the top. The portions 21 and 22 preferably constitute the entire sidewall 16 together.

The inlet conduit 10 is positioned through the first end wall 17, and is coaxial to an inlet axis X10. The inlet axis X10 is preferably coaxial with the housing axis X14.

The separator 3 optionally comprises a muffler 13, extending axially from the first end wall 17 within the housing 14, radially surrounding the inlet conduit 10. In this case, the inlet conduit 10 is positioned through the wall 17 and through the muffler 13 for admitting the refrigerant flow into the housing 14 after the muffler 13. Thus, noise emitted by the gaseous flow is reduced.

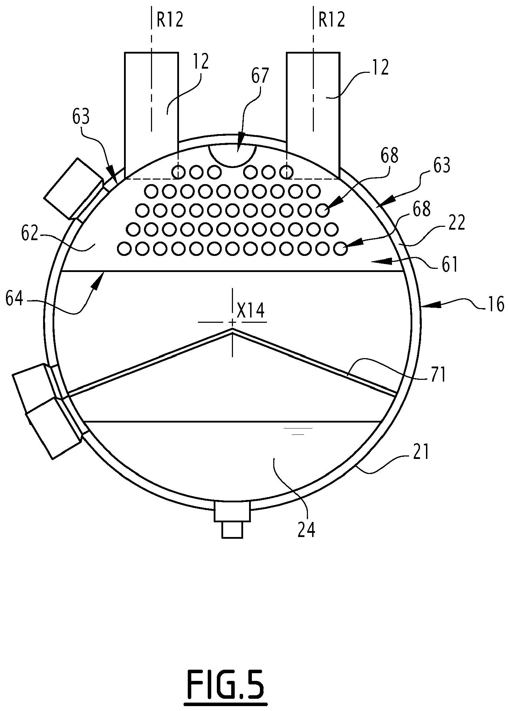

The refrigerant outlet conduit 12 is positioned proximate to the second end wall 18, i.e. axially closer to the wall 18 than to the end wall 17. The conduit 12 is positioned through the upper portion 22 of the sidewall 16. The conduit 12 is coaxial to an outlet axis R12 being in a plane perpendicular with the housing axis X14. In use, the axis R12 is preferably vertical. As shown in figures 2 and 5, the separator may comprise more than one refrigerant outlet conduit 12, in this example, two outlet conduits 12. As shown in figures 2 and 5, the several outlet conduits 12 are positioned so that their respective axis R12 are parallel and belong to the same plane orthogonal to the axis X14. The two outlet conduits 12 are preferably distributed symmetrically relative to a plane radial to axis X14.

The lubricant outlet conduit 11 is coaxial to an axis R11, preferably parallel to a plane perpendicular to the axis X14. In use, the axis R11 is preferably vertical. In the present example, the conduit 11 is positioned through the upper portion 22 of the sidewall.

In use, the lower portion 21 is used as a pool for receiving a volume of retrieved lubricant 24, extracted from the lubricant-charged refrigerant circulating through the housing 14. Within the housing 14, the lubricant outlet conduit 11 extends down inside the portion 21 of the sidewall 16, for plunging into the retrieved lubricant 24, so that said lubricant 24 can be pumped out of the housing through the conduit 11.

The separator 3 comprises a primary separation stage 31, positioned within the housing 14 and configured for coarse separation of lubricant from the lubricant-charged gaseous refrigerant admitted at the inlet conduit 10. The separator 3 comprises a secondary separation stage 32, positioned within the housing 14 and configured for fine separation of lubricant from the lubricant-charged refrigerant discharged from the primary separation stage. The primary separation stage 31 is axially interposed between the inlet conduit 10 and the secondary separation stage 32, along axis X14, or between the end wall 17 and the stage 32. The secondary separation stage 32 is axially interposed between the primary separation stage 31 and the outlet conduit 12. Stage 32 is axially interposed between stage 31 and the end wall 18. In the present embodiment, conduit 11 is axially positioned between stage 32 and conduit 12. In use, the purified refrigerant discharged through the conduit 12 originates from the lubricant-charged refrigerant admitted through conduit 10, after separation through both stages 31 and 32, successively. In use, the lubricant 24 originates from the lubricant-charged refrigerant admitted through conduit 10, after separation through both stages 31 and 32, successively.

In the present embodiment, the stage 31 comprises an inlet diverter 41 interposed between the inlet conduit 10 and the stage 32. The inlet diverter 41 imparts that at least a part of the flow of lubricant-charged gaseous refrigerant discharged from the inlet conduit 10 into the housing 14 has to circumvent said inlet diverter 41 for being admitted into the separation stage 32.

The inlet diverter 41 comprises an inlet transversal plate 42 positioned proximate to the inlet conduit 10, i.e. more proximate to the inlet conduit 10 than to the secondary stage 32. The inlet transversal plate 42 is perpendicular to the inlet axis X10 and crossed by the inlet axis. Thus, the plate 42 is orthogonal to axis X14. The plate 42 is advantageously planar.

The plate 42 comprises a lower attachment edge 43, in matching contact with the interior surface of the sidewall 16 of the housing 14. The lower attachment edge 43 is in radial contact with the lower portion 21 and is preferably arcuate for matching with the circular shape of the sidewall 16. Thus, the plate 42 obstructs at least the lower half of the passage section of the sidewall 16.

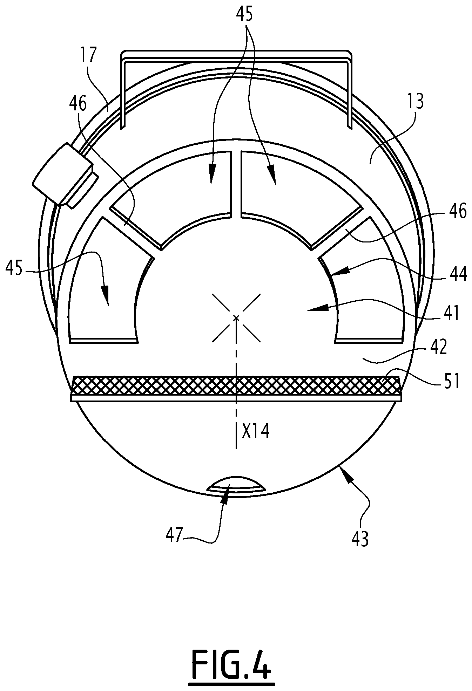

The plate 42 comprises an upper free edge 44. The upper free edge 44 and the sidewall 16 of the housing 14 define a passage section 45 for the circumventing part of the flow of lubricant-charged gaseous refrigerant, leading to the stage 32. More precisely, this passage section 45 is delineated by the free edge 44 and by the upper portion 22 of the sidewall 16. Preferably, as visible in figure 4, the free edge 44 has a central arcuate part, centered on axis X14, and to lateral radial parts, radial to the axis X14. The central arcuate part is preferably of larger diameter than the inlet conduit 10. Thus, the passage section 45 is less than half of the transversal section of the sidewall 16.

For promoting coalescence and for structurally reinforcing the free edge 44, the inlet diverter 41 comprises radial arms 46 parallel to the inlet transversal plate and connecting the free edge 44 to the sidewall 16. Preferably, the radial arms connect the central arcuate part to the upper portion 22.

The edges 43 and 44 preferably radially surround axis X10. At least the central part of the free edge 44 extends higher than the conduit 10, so that most of the incoming flow of lubricant-charged refrigerant is diverted.

The inlet transversal plate 42 comprises a lower aperture 47, positioned at the attachment edge 43, the aperture 47 being radially open so as to define, with the lower portion 21 of the sidewall 16, a passage section for the lubricant sitting at the bottom of the housing 14. Preferably, the aperture 47 and the passage section 45 are diametrically opposed, and distributed along a vertical axis. Advantageously, in use, the level of lubricant is maintained higher than the size of the aperture 47, so that the entire aperture 47 is immerged in the sitting lubricant 24. For this purpose, the lower end of the conduit 11 is preferably at a higher height than the aperture 47, as shown in figure 1. Thus, in use, no gaseous refrigerant passes through the aperture 47, although sitting retrieved lubricant may freely circulate from one side of the plate 42 to the other through the aperture 47. The size of the passage section 45 is preferably more than twice larger than the size of the aperture 47.

Apart from the aperture 47, the plate 42 is preferably devoid of through holes so that no refrigerant may flow through the plate 42.

The separator 3 comprises a longitudinal separation grid 51, which is parallel to the axis X14, i.e. horizontal. Longitudinally, the grid 51 connects the secondary separation stage 32 to the muffler 13, or to the first end wall 17 if no muffler is provided. Transversally, the grid 51 also connects one side of the sidewall 16 to the other. The grid 51 delimits a boundary between the upper portion 22 and the lower portion 21 of the sidewall 16, between the secondary separation stage 32 and the muffler 13 or between the secondary separation stage 32 and the first end wall 17 if no muffler is provided. The grid 51 is preferably planar and horizontal.

The inlet transversal plate 42 is crossed through by the grid 51, or the grid is crossed through by the inlet transversal plate 42. For example, the grid 51 comprises two separate grids parts, at either side of the plate 42.

In use, the level of sitting lubricant 24 is preferably kept lower than the grid 51. For this purpose, the lower end of the conduit 11 is preferably at lower height than the grid 51.

The separator 3 may comprise a plate 52, horizontal or slightly inclined, placed over the grid 51 along the junction of said grid 51 with the plate 52, the plate 52 connecting the two transversal sides of the sidewall 16 together. The plate 52 is devoid of through holes, and is in continuation of the plate 52, with an angle equal to 90° or more than 90°, so that the plate 52 forms a slope for the lubricant dripping off the plate 42.

The plate 42 promotes coarse separation of lubricant droplets contained in the flow of incoming refrigerant by shock of the flow against said plate 42 and sudden forced reorientation of the flow, where said droplets coalesce into drops that run off the plate 42, down towards the grid 51 or plate 52.

The secondary separation stage 32 comprises an inlet side 34, for admitting the flow of lubricant-charged gaseous refrigerant coming from the primary stage 31, and an outlet side 35, for discharging the flow of lubricant-charged gaseous refrigerant. The inlet side 34 and the outlet side 35 are crossed by an axis X32, called "secondary axis" that is perpendicular to the axis R12, and coaxial to the axis X14. The sides 34 and 35 are perpendicular to the axis X32.

In the present embodiment, the stage 32 comprises a demister 33, in particular a demister mesh pad. This kind of mesh pad comprises several metallic wires provided as a mesh of wires. Alternatively, stage 32 could comprise an assembly of several metallic plates provided with small holes. In any case, the demister 33 promotes coalescence of the smaller droplets of lubricant contained in incoming the lubricant-charged refrigerant. The demister preferably occupies the entire passage section delimited by the sidewall 16, so that any refrigerant admitted in the conduit 10 must go through the demister pad before exiting through conduit 12. The lower part of the secondary stage 32 is preferably immerged in the sitting lubricant 24 received at the bottom of the sidewall 16, so that said sitting lubricant 24 may circulate longitudinally through the secondary stage 32.

The separator 3 comprises an outlet diverter 61, interposed between the secondary separation stage 32 and the refrigerant outlet conduit 12. The outlet diverter 61 imparts that at least a part of the lubricant-charged gaseous refrigerant discharged from the secondary separation stage 32 has to circumvent said outlet diverter 61 for being admitted into the refrigerant outlet conduit 12.

The outlet diverter 61 comprises an outlet transversal plate 62, oriented radially, i.e. perpendicular to the secondary axis X32 and parallel to the outlet axis R12. Alternatively, the plate 62 is oriented in a direction slightly inclined relative to the radial direction. The plate 62 is preferably planar. The plate 62 is positioned proximate to the outlet conduit 12, i.e. more proximate to the outlet conduit 12 than to the secondary stage 32.

The outlet transversal plate 62 covers less than half of the transversal passage section defined by the sidewall 16, at the axial location of said plate 62. Thus, the outlet transversal plate 62 is not crossed by axis X14. Thus, the passage section 65 is larger than the surface of the plate 62.

The outlet transversal plate 62 comprises an upper attachment edge 63, in matching contact with the interior surface of the sidewall 16 of the housing 14. The attachment edge 63 is in radial contact with the upper portion 22 and is preferably arcuate for matching with the circular shape of the sidewall 16. Thus, the plate 62 partially obstructs the upper half of the passage section of the sidewall 16.

The plate 62 comprises a lower free edge 64. The edge 64 and the sidewall 16 of the housing 14 define a passage section 65 for the circumventing part of the flow of lubricant-charged gaseous refrigerant, leading to the outlet conduit 12. More precisely, this passage section 65 is delineated by the free edge 64 and by the lower portion 21 of the sidewall 16. Preferably, as shown in figure 5, the free edge 44 is shaped as a straight line, parallel to a horizontal diameter of the sidewall 16, and extending from one transversal side of the sidewall 16 to the other. In use, the level of lubricant is maintained lower than the edge 64 so as to provide a large zone for circulation of the gaseous refrigerant. The edge 64 is preferably at a lower height than each of the respective lower end of one or more the conduit 12, so that a substantial part of the flow of refrigerant has to effectively circumvent said edge 64 for being admitted into conduit 12.

The edge 64 is preferably positioned between the upper portion 22 of the sidewall 16 and the axis X14, i.e. is higher than the axis X14. Thus, the passage section 65 is of larger size than the surface of the plate 62.

The plate 62 comprises an upper aperture 67, positioned at the attachment edge 63, the aperture 67 being radially open so as to define, with the upper portion 22 of the sidewall 16, a passage section for a small part of the flow of refrigerant at the top of the housing 14. Thanks to the aperture 67, the presence of the plate 62 does not imply too much recirculation of the gaseous refrigerant, the aperture 67 avoiding pressure drop. Preferably, the aperture 67 and the passage section 65 are diametrically opposed, and distributed along a vertical axis. The size of the passage section 65 is preferably more than three times larger than the size of the aperture 67.

Preferably, the plate 62 comprises a plurality of through-holes 68 distributed over the surface of the plate 62. Each through-hole 68 is configured for being crossed by a part of the flow of gaseous refrigerant. Each through-hole 68 is smaller than the aperture 67. The holes 68 contribute to reduce pressure drop, and promote coalescence of finer droplets of lubricants that may still be contained within the gaseous refrigerant after separation by the secondary stage 32.

The separator 3 comprises a longitudinal separation grid 71, which is parallel to the axis X14, i.e. horizontal. Longitudinally, the grid 71 connects the stage 32 to the end wall 18. Transversally, the grid 71 delimits a boundary between the upper portion 22 and the lower portion 21, between the secondary separation stage 32 and the end wall 18. As best visible in figure 5, the grid 71 is preferably shaped as a house roof, i.e. comprises two planar parts parallel to the axis X14 and inclined relative to each other, around an axis parallel to axis X14, so as to define transversal outwardly oriented slopes.

Alternatively, the grid 71 may be planar, e.g. along the same plane than the grid 51.

The free edge 64 of the plate 62 is positioned between the grid 71 and the upper portion 22 of the sidewall 16. Thus, the grid 71 crosses the passage section 65 so that said passage section is divided in two, a higher part of the passage 65 being delineated by the grid 71, the upper portion 22 of the sidewall and the free edge 64, a lower part of the passage 65 being delineated by the grid 71 and the lower portion 21 of the sidewall 16.

In use, the level of sitting lubricant 24 is preferably kept lower than the grid 71. For this purpose, the lower end of the conduit 11 is preferably at lower height than the grid 71. In the present example, the conduit 11 crosses through the grid 71 for reaching the lubricant sitting underneath.

The grid 71 is configured for being crossed in a downward direction by lubricant extracted from the flow of gaseous refrigerant, and is also configured for promoting degassing of the lubricant sitting underneath, implying degassed refrigerant going upwards through the grid 71. Said degassing is also promoted by the orientation of the conduit 12 being positioned over the grid 71, as chimneys.

The path followed by the flow discharged from the inlet conduit 10 is shown by two arrows F1 and F2 in figure 1. The flow admitted by the conduit 10 is parallel to axis X10, in a direction d1, parallel to axis X14 and directed towards the end wall 18. The part of the flow shown by arrow F1 is admitted at a lower location of the conduit 10 and the part of the flow shown by arrow F2 is admitted at a higher location of the conduit 10. The diverter 41 imparts that the flow F1 is diverted in a radial direction d2, oriented downwards, along the diverter 41. The flow F1 then turns back in a direction opposite to the direction d1, where it is diverted again by the wall of the muffler 13, or by the end wall 17 if no muffler 13 is provided, and turns up in an upward radial direction opposite to direction d2. Thus, at least a part of the admitted flow, shown by arrow F1, has to make a complete turn of at least 270° for crossing through the diverter 41. Since the flows F1 and F2 is projected at high speed against the plate 42, in particular against a part of the plate delineated by the central arcuate part of the edge 44, bigger droplets of lubricant contained in the flow coalesce and drip off the plate 42 down to the pool of sitting lubricant 24 received at the lower portion 21 of the sidewall.

The grid 51, as well as the plate 52 if provided, avoids that the sitting lubricant 24 is agitated too much by the flow F1. Thus, the sitting lubricant 24 is not reengassed too much by the incoming gaseous refrigerant. In addition, the passage section 45 is diametrically opposite to the sitting lubricant, so that the flow F1 and F2 incoming at high velocity is mostly kept at the top of the housing 14, at least until said flow crosses through the passage section 45. This, agitation and reengassing of the sitting lubricant 24 is reduced.

After being forced through the passage section 45, the flow of refrigerant is directed towards side 34 of the stage 32, as shown by the arrows F3. Thanks to the diverter 61, the flow F3 between the diverter 41 and the stage 32 is shaped as a cone of high angle, directed towards directions d1 and d2, so that the flow reaches the side 34 in a manner distributed onto most of the surface of side 34. Thus the secondary stage 32 is used in an efficient manner. In other words, the outlet diverter promotes that the flow of gaseous lubricant-charged refrigerant is distributed over most of the passage section of the secondary separation stage, making the secondary separation stage more efficient and allowing for designing more compact separator.

In addition, relative to the axis X14, the plates 42 and 62 are oriented at an opposite sector, so that one passage section is upper, here passage section 45, and the other is lower, here passage section 65. This has the effect of promoting spreading the flow F3 emitted from the passage section 45, so that all or most of the surface of the inlet side 34 of the secondary stage 32 is penetrated by the gaseous flow, thus improving efficiency of the stage 32. In the absence of the plate 62, most of the flow would circulate only through the upper part of the secondary stage 32 and escape straight through the outlet conduit 12.

In addition, the sudden increase of passage section between the diverter 41 and the side 34 of the stage 32 promotes additional separation of lubricant from the gaseous flow of refrigerant, said separated lubricant falling downwards to the bottom of the sidewall 16, through the grid 51. The velocity of the gaseous flow is reduced by the spreading, also promoting separation.

Here again, between the plate 42 and the side 34 of the secondary stage 32, the grid 51 prevents an excessive agitation of the lubricant sitting underneath by the flow F3.

Between sides 34 and 35 of the secondary stage 32, finer droplets of lubricant are extracted from the gaseous flow, by coalescing along the mesh pad wires, or plates with small holes. The coalesced lubricant flows down along the wires or plates, thus feeding the sitting lubricant 24.

Between the side 35 and the end wall 18, a part of the flow emitted by side 35, shown by arrows F4, crosses through the aperture 67 and the through holes 68, in a direction approximately parallel to direction d1. Thus, little recirculation occur at the edge 63, avoiding excessive pressure drop. The aperture 67 and the holes 68 also promote additional separation of lubricant from the gaseous flow by coalescence. The extracted lubricant drips down to the bottom of the sidewall 16, through the grid 71, feeding the sitting lubricant 24.

Between the side 35 and the end wall 18, another part of the flow emitted by side 35, shown by arrows F5, circumvent under the plate 62, around the edge 64. Since a part of the flow needs circumventing the plate 62 after crossing through the stage 32, a part of the flow upstream from the stage 32, shown by arrows F3 and F4, spreads as a divergent cone, as explained above, so as to be distributed over most of the surface of the stage 32. Circumventing the plate 62 may promote additional separation of lubricant from the flow of the arrows F5, the separated lubricant falling down the bottom of the housing 14 through the grid 71.

The grid 71 avoids agitation of the sitting lubricant 24 by the flows F4 and F5.

Once the flow of gaseous refrigerant has crossed through and/or circumvented around the plate 62, a part of the flow reaches the end wall 18, said end wall diverting said flow in convolutions. Then, the convoluted flow exits the housing 14 through the conduit 12. Another part of the flow that has crossed through and/or circumvented around the plate 62 also exits the housing 14 through the conduit 12 without reaching the end wall 18.

Below are disclosed further embodiments. The present disclosure is mainly focused on the differences in comparison to the previously disclosed embodiments, while similar features are not explained again. Similar expressions are used for similar features. Similar reference signs increased of 100 are used for similar features.

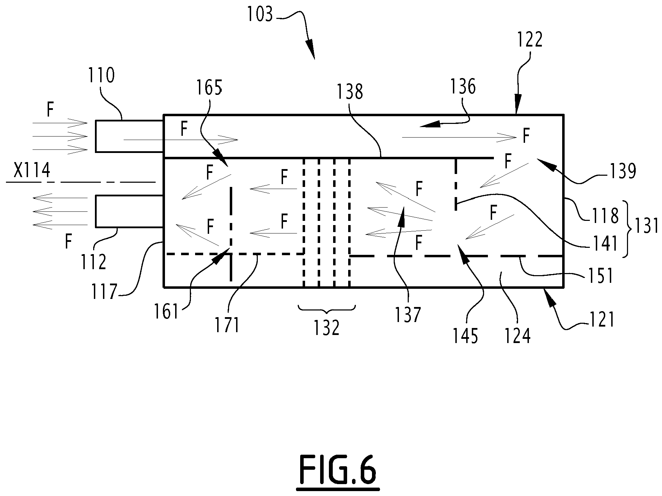

In the embodiment of figure 6, a separator 103 comprises a housing 114, an inlet conduit 110, a primary separation stage 131, a secondary separation stage 132, a lubricant outlet conduit (not shown), a refrigerant outlet conduit 112 and an outlet diverter 161. The separator 103 is preferably devoid of muffler.

The housing 114 comprises a sidewall 116 defining a horizontal housing axis X114, an end wall 117 and an end wall 118 connected by the sidewall 116. The conduits 110 and 112 are both horizontal and positioned through the end wall 117. The conduit 110 is placed over conduit 112, which may be advantageous depending on the respective location of the compressor and of the condenser, which may be respectively connected to the conduits 110 and 112. Arrows F in figure 6 illustrate the path followed by the flow of gaseous refrigerant.

The sidewall 116 comprises a lower portion 121 and an upper portion 122, separated by a longitudinal wall 138 provided within the housing 114. The longitudinal wall 138 is at the boundary between the upper portion 122 and the lower portion 121, and extends horizontally from the wall 117 in direction of the wall 118. The separator 3 comprises a longitudinal inlet channel 136 and a longitudinal outlet channel 137, separated by the longitudinal wall 138, within the housing 114. The channel 136 is preferably of smaller passage section than the channel 137 for promoting separation of lubricant from the refrigerant flow F when the flow F reaches channel 137. An opening 139, connecting channels 136 and 137 is defined between the wall 118 and the free edge of the wall 138. The channel 136 is delineated by the upper portion 122 and the wall 138, while the channel 137 is delineated by the lower portion 121 and the wall 138. The inlet conduit 110 is leads to the channel 136 and the channel 137 leads to the outlet conduit 112.

The separator 103 comprises an inlet diverter 141, positioned in the channel 137 proximate to the opening 139. The inlet diverter has an attachment edge in matching contact with the wall 138, and a free edge distant from the sidewall 116 for defining a passage section 145 between the free edge and the portion 121 of the sidewall.

The diverter 141 is in the form of a planar plate, perpendicular to the axis X114 and optionally provided with through-holes distributed over its surface.

The stage 132 for fine separation of lubricant from the flow of refrigerant, comprises a demister pad. The stage 132 is positioned within the channel 137 downstream relative to the diverter 141.

Lubricant 124 retrieved from the flow is received at the bottom of the channel 137. The separator 103 comprises a horizontal grid 151, provided over the lubricant 124 and extending from the wall 118 to the stage 132, and a horizontal grid 171, provided over the lubricant 124 and extending from the wall 117 to the stage 132.

The outlet diverter 161 is positioned in the channel 137 downstream the stage 132, proximate to the outlet conduit 112, between wall 117 and stage 132. The outlet diverter 161 comprises a planar plate, perpendicular to the axis X114. The plate of the diverter 161 comprises an attachment edge in matching contact with the lower portion 121 of the sidewall 116, and a free edge that defines a passage section 165 with the wall 138. The outlet diverter 161 comprises through holes distributed over its surface. The outlet diverter 161 comprises an aperture positioned at its attachment edge, immerged in the lubricant 124.

The stage 131 comprises the wall 118 and the diverter 141. The flow F of gaseous refrigerant discharged into the housing 114 by the conduit 110 is admitted at high velocity, through the channel 136. The flow F of gaseous refrigerant hits the wall 118 at the end of the channel 136, promoting coarse separation of lubricant by coalescence and by sudden reorientation of the flow F. The flow F is diverted downwards, through the opening 139 for admission into the channel 137. A part of the flow F has to circumvent the plate of the diverter 141, while another part crosses through. Thus, further lubricant is separated in a coarse manner not only by coalescence with the plate 141, but also by the obligation to circumvent the edge of wall 138 at the opening 139, and to circumvent the free edge of the diverter 161 at the passage section 145. Since passage section 145 is provided at a bottom position of channel 137 while passage section 165 is provided at an upper position of channel 137, the flow F of refrigerant entering the stage 132 is distributed over most of the inlet side of the stage 132, which ensures an optimal efficiency. After a part of the flow F circumvents the diverter 161, while another part crosses through said diverter 161, the flow F exits the housing through the outlet 112.

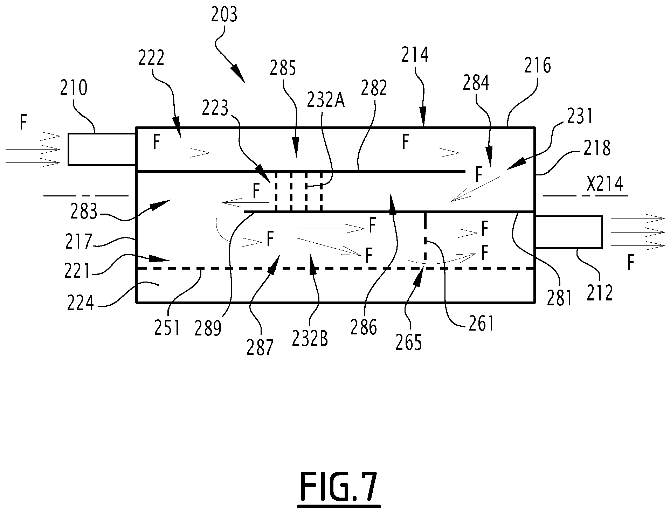

In the embodiment of figure 7, a separator 203 comprises a housing 214, an inlet conduit 210, a primary separation stage 231, a secondary separation stage 232A, a secondary separation stage 232B, a lubricant outlet conduit (not shown), a refrigerant outlet conduit 212 and an outlet diverter 261. The separator 203 is preferably devoid of muffler.

The housing 214 comprises a sidewall 216 defining a horizontal housing axis X214, an end wall 217 and an end wall 218 connected by the sidewall 216. The end walls 217 and 218 are perpendicular to the axis X214. The conduits 210 and 212 are both horizontal. The conduit 210 is positioned through the end wall 217 while the conduit 212 is position through the end wall 218. The conduit 210 is placed higher than the conduit 212. The location of conduits 210 and 212 in this embodiment may be advantageous depending on the respective location of the compressor and of the condenser. Arrows F in figure 7 illustrate the path followed by the flow of gaseous refrigerant.

The sidewall 216 comprises a lower portion 221, an upper portion 222 and a middle portion 223. The portions 221 and 223 are separated by a lower longitudinal wall 281 provided within the housing 214. The portions 222 and 223 are separated by an upper longitudinal wall 282 provided within the housing 214.

The wall 281 extends horizontally from the end wall 218 in direction of the end wall 217 where an opening 283 is defined between the wall 217 and the free edge 289 of the wall 281. The edge 289 is distant from the stage 232A, so as to impart that the flow F has to circumvent the edge 289 for going through the opening 283 and for reaching the outlet 212.

The wall 282 extends horizontally from the wall 217 in direction of the wall 218 where an opening 284 is defined between the wall 218 and a free edge of the wall 282.

The housing 214 comprises an upper longitudinal channel 285, a middle longitudinal channel 286 and a lower longitudinal channel 287. The upper channel 285 extends longitudinally from wall 217 to wall 218, and is delimited by the upper portion 222 of the housing 214 and by the wall 282. The channel 286 extends longitudinally from wall 217 to wall 218, and is delimited by the walls 281 and 282. The channel 287 extends longitudinally from wall 217 to wall 218, and is delimited by the wall 281 and by the lower portion 221 of the housing 214. The channels 286 and 287 are connected by the opening 283. The channels 285 and 286 are connected by the opening 284.

The channels 285 and 286 preferably define a respective passage section of similar size, while the channel 287 is of larger passage section, for promoting separation of lubricant from the refrigerant flow F when the flow F reaches channel 287.

Contrary to the embodiment of figure 6, the primary stage 231 for coarse separation of lubricant does not comprise any inlet diverter, but only a part of the end wall 218 located at the free edge of the upper longitudinal wall 282, at the opening 284.

The stage 232A for fine separation of lubricant is positioned within the channel 286, downstream the opening 284. The stage 232A comprises a demister pad.

The stage 232B for fine separation of lubricant does not comprise any demister pad, nor demister plates, but is formed by the empty channel 287, since the channel 287 has a much larger, for example more than twice larger, passage section, than the channels 285 and 286.

Lubricant 224 retrieved from the flow is received at the bottom of the channel 287. The separator 203 comprises a horizontal grid 251, provided over the lubricant 224 and extending from the wall 217 to the wall 218.

The outlet diverter 261 is positioned in the channel 287 proximate to the outlet conduit 212. The outlet diverter 261 comprises a planar plate, perpendicular to the axis X214. The plate of the diverter 261 comprises an attachment edge in matching contact with the wall 281, and a free edge that defines a passage section 265 with lower portion 221 of the sidewall 216. The grid 251 crosses the passage section 265. The outlet diverter 261 comprises through holes distributed over its surface.

The flow F of gaseous refrigerant discharged into the housing 214 by the conduit 210 is admitted at high velocity, through the channel 285. The flow F of gaseous refrigerant hits the wall 218 at the end of the channel 285, promoting coarse separation of lubricant by coalescence and by sudden reorientation of the flow F. The flow F is diverted downwards by wall 218, through the opening 284 for admission into the channel 286.

Since the opening 284 is positioned at a higher height than the opening 283, the flow F of refrigerant entering the stage 232A is distributed over most of the inlet side of the stage 232A, which ensures a better efficiency of the stage 232A. The spreading of the flow F at the inlet side of the stage 232A is increased by the presence of the diverter 261 downstream.

After stage 232A, the flow F is reoriented downwards through the opening 283 by the end wall 217, and then towards the diverter 261 by the channel 287. The sudden increase of section promotes additional fine separation of lubricant. Thus, the part of the channel 287 upstream the diverter constitutes a secondary stage 232B able to separate finer droplets of lubricant contained within the gaseous flow F. The presence of the diverter 261 ensures that a part of the flow F has to circumvent the diverter 261 before exiting, while another part passes through the diverter 261. Consequently, the diverter 261 ensures a spreading of the flow F admitted into the channel 287 at the opening 283, for enhanced efficiency of the stage 232B.

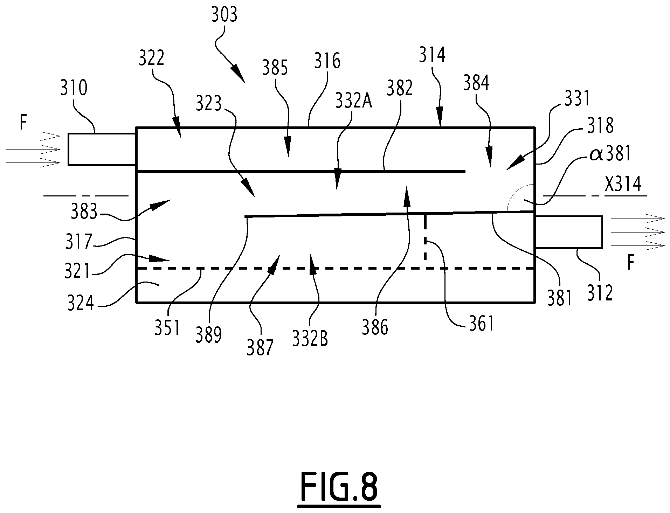

In the embodiment of figure 8, similarly to the embodiment of figure 7, a separator 303 comprises an inlet conduit 310, a refrigerant outlet conduit 312, a lubricant outlet conduit (not shown), a housing 314, receiving lubricant 324 at the bottom, a sidewall 316 defining a housing axis X314 and comprising a lower portion 321, an upper portion 322 and a middle portion 323, end walls 317 and 318, a lower longitudinal wall 381 with a free edge 389, an upper longitudinal wall 382, an upper longitudinal channel 385, a middle longitudinal channel 386, a lower longitudinal channel 387, with an opening 383 for connecting channels 386 and 387 and an opening 384 for connecting channels 386 and 385, an outlet diverter 361, separation stages 331, 332A and 332B, a grid 351.

The embodiment of figure 8 is identical to the embodiment of figure 7, except that in the separator 303 of figure 8, the secondary stage 232A is replaced by a secondary stage 322A devoid of demister pad and that the lower longitudinal wall 381 is inclined. Like for the stages 232B and 332A, the fine separation of lubricant obtained at stage 322A is obtained by an increased passage section. For stage 322A, the passage section of the middle channel 386 is increased since the wall 381 is inclined by an angle α381 superior to 90° relative to the wall 318, so that the passage section of the channel 386 is larger proximate to the edge 389 than proximate to the opening 384. In other words, the free edge 389 of the wall 381 is farther from a plane defined by the wall 382 and the opposite attachment edge of the wall 381 is closer to the plane defined by the wall 382.

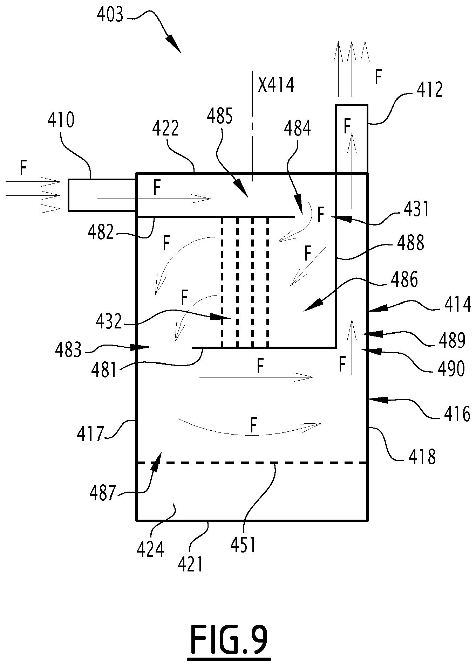

In the embodiment of figure 9, a separator 403 comprises a housing 414, an inlet conduit 410, a primary separation stage 431, a secondary separation stage 432, a lubricant outlet conduit (not shown), a refrigerant outlet conduit 412. The separator 403 is preferably devoid of muffler.

The housing 414 comprises a sidewall 416 defining a vertical housing axis X414, an lower end wall 421 and an upper end wall 422 connected by the wall 416. The walls 421 and 422 are perpendicular to the axis X414. The sidewall 416 comprises diametrically opposed first side portion 417 and second side portion 418.

The conduit 410 is horizontal and positioned through the side portion 417, proximate to the upper end wall 422. The conduit 412 is vertical and positioned through the upper end wall 422, proximate to the side portion 418.

The location of conduits 410 and 412 and the shape of the housing 414 in this embodiment may be advantageous depending on the respective location of the compressor and of the condenser. Arrows F in figure 9 illustrate the path followed by the flow of gaseous refrigerant.

The separator 403 comprises, within the housing 414, an upper transversal wall 482 and a lower transversal wall 481, perpendicular to axis X414 and parallel to each other. The housing 414 also comprises a longitudinal wall 488 parallel to the axis X414.

The upper transversal wall 482 and the end wall 422 delimit longitudinally an upper horizontal transversal channel 485, for admitting the flow F incoming from the inlet conduit 410. The conduit 410 leads one transversal end of said channel 485, while the opposite transversal end of the channel 485 is delimited by the longitudinal wall 488. The upper transversal wall 482 extends horizontally from the portion 417 in the direction of portion 418 and of the longitudinal wall 488, where the wall 482 forms a free edge. The longitudinal wall 488 and the free edge of the upper transversal wall 482 delineate an opening 484, leading to a middle horizontal transversal channel 486. The channel 486 is delimited longitudinally by the transversal walls 481 and 482. The channel 486 defines a larger passage section than the upper transversal channel 485, since the walls 481 and 482 are farther apart than are the walls 422 and 482. One transversal end of the middle transversal channel 486 is delimited by the longitudinal wall 488, while the opposite transversal end of the middle transversal channel 486 is delimited by the portion 417 of the sidewall 416. The transversal wall 481 extends horizontally from the longitudinal wall 488, in the direction of the portion 417 of the sidewall 416, where the transversal wall 481 forms a free edge. The free edge of transversal wall 481 and the portion 417 of the sidewall 416 delineate an opening 483 connecting the middle transversal channel 486 to a lower transversal channel 487.

The lower transversal channel 487 is longitudinally delimited by the transversal wall 481 and the end wall 421. The lower transversal channel 487 is transversally delimited by the portions 417 and 418 of the sidewall. The lower transversal channel 487 defines a larger passage section than the middle transversal channel 486 and than the upper transversal channel 485, since the transversal walls 421 and 481 are farther apart than the corresponding transversal walls of the channels 485 and 486.

A longitudinal outlet channel 489 is defined transversally between the portion 418 of the sidewall 416 and the longitudinal wall 488. Longitudinally, the longitudinal channel 489 extends from the lower transversal channel 487 to the upper end wall 422, where channel 489 leads to the outlet conduit 412. The longitudinal channel 489 is connected to the lower transversal channel 487 through an opening 490, defined between the connection of the lower transversal wall 481 with the longitudinal wall 488 and the portion 418 of the sidewall 416.

The primary separation stage 431 of the separator 403 does not comprise any inlet diverter, but only a part of the longitudinal wall 488 located at the free edge of the upper transversal wall 482, at the opening 484.

The secondary stage 432 for fine separation of lubricant is positioned within the middle transversal channel 486, downstream the opening 484. The stage 432 comprises a demister pad.

Lubricant 424 retrieved from the flow of refrigerant F is received at the bottom of the channel 487. The separator 403 comprises a horizontal transversal grid 451, provided over the lubricant 424 and extending from the portion 417 to the portion 418 of the sidewall 416.

The flow F of gaseous refrigerant discharged into the housing 414 by the conduit 410 is admitted at high velocity, through the upper transversal channel 485. The flow F of gaseous refrigerant hits the longitudinal wall 488 at the end of channel 485, promoting coarse separation of lubricant by coalescence and by sudden reorientation of the flow F. The flow F is diverted downwards by the longitudinal wall 488, through the opening 484 for admission into the middle transversal channel 486.

Since the opening 484 is positioned at a higher height than the opening 483, the flow F of refrigerant entering the stage 432 is distributed over most of the inlet side of the stage 432, which ensures a better efficiency of the stage 432. Separation of lubricant in the middle transversal channel 486 is promoted by the sudden increase of passage section, compared to the upper transversal channel 485.

After stage 432, the flow F is reoriented downwards through the opening 483 by the portion 417 of the sidewall 416, and then towards the opposite portion 418 by the lower transversal channel 487. Additional separation of lubricant in the lower transversal channel 487 is promoted by the sudden increase of passage section, compared to the middle transversal channel 486. The flow F is again reoriented, in the upward direction by the portion 418 of the sidewall 416, through the opening 490. These two successive reorientations, through the openings 483 and 490 imply that the flow turns a total of approximately 270°, which promotes additional separation of lubricant thereof. Within the lower transversal channel 487, the grid 451 promotes degassing of the sitting lubricant 424, without implying too much agitation of the lubricant 424 by the flow F. The longitudinal channel 489 being positioned over the sitting lubricant 424, degassing through the opening 490 is promoted.

After being admitted through the opening 490, the flow F is directed upwards to the outlet conduit 412 through the longitudinal channel 489. The relatively high length of the longitudinal channel 489 may impart additional separation of lubricant by gravity.

Any feature disclosed above for a particular embodiment may be implemented in any other of the disclosed embodiments, when technically possible.

## Claims

1. A separator (3; 103; 203; 303; 403), for separating lubricant from lubricant-charged gaseous refrigerant, the separator (3; 103; 203; 303; 403) comprising:
- a housing (14);
- an inlet conduit (10), for admitting a flow (F1, F2, F3, F4, F5; F) of lubricant-charged gaseous refrigerant within the housing (14), the inlet conduit (10) being coaxial to an inlet axis (X10);
- a primary separation stage (31), positioned within the housing (14) and configured for coarse separation of lubricant from the lubricant-charged gaseous refrigerant admitted at the inlet conduit (10);
- a secondary separation stage (32), positioned within the housing (14) and configured for fine separation of lubricant from the lubricant-charged refrigerant discharged from the primary separation stage (31);
- a lubricant outlet conduit (11), for discharging lubricant separated from the admitted lubricant-charged gaseous refrigerant; and
- a refrigerant outlet conduit (12), for discharging purified gaseous refrigerant from the housing (14), the purified gaseous refrigerant being obtained by separation of lubricant from the lubricant-charged gaseous refrigerant by means of the primary separation stage (31) and the secondary separation stage (32), the refrigerant outlet conduit (12) being coaxial to an outlet axis (R12).

2. The separator (3; 103; 203; 303; 403) according to claim 1, wherein the secondary separation stage (32) comprises a demister, in particular a demister mesh pad.

3. The separator (3; 103; 203; 303; 403) according to any one of claims 1 or 2, wherein the separator (3; 103; 203; 303; 403) comprises an outlet diverter (61), interposed between the secondary separation stage (32) and the refrigerant outlet conduit (12), imparting that at least a part of the lubricant-charged gaseous refrigerant discharged from the secondary separation stage (32) has to circumvent said outlet diverter (61) for being admitted into the refrigerant outlet conduit (12).

4. The separator (3; 103; 203; 303; 403) according to claim 3, wherein:
- the secondary separation stage (32) comprises an inlet side (34), for admitting the flow (F1, F2, F3, F4, F5; F) of lubricant-charged gaseous refrigerant, and an outlet side (35), for discharging the flow (F1, F2, F3, F4, F5; F) of lubricant-charged gaseous refrigerant, the inlet side (34) and the outlet side (35) being crossed by a secondary axis (X32) perpendicular to the outlet axis (R12) ; and
- the outlet diverter (61) comprises an outlet transversal plate (62), oriented perpendicular to the secondary axis (X32) and preferably parallel to the outlet axis (R12), the outlet transversal plate (62) comprising:
∘ a first attachment edge (63), in matching contact with the housing (14), and
∘ a first free edge (64), the first free edge (64) and the housing (14) defining a first passage section (65) for the circumventing part of the flow (F1, F2, F3, F4, F5; F) of lubricant-charged gaseous refrigerant, leading to the refrigerant outlet conduit (12);
and wherein the surface of the first passage section (65) is preferably larger than the surface of the outlet transversal plate (62).

5. The separator (3; 103; 203; 303; 403) according to claim 4, wherein the outlet transversal plate (62) comprises a plurality of through-holes (68) distributed over the surface of the outlet transversal plate (62), each through-hole (68) being configured for being crossed by the flow (F1, F2, F3, F4, F5; F) of gaseous refrigerant.

6. The separator (3; 103; 203; 303; 403) according to any one of claims 4 or 5, wherein the outlet transversal plate (62) comprises a first aperture (67), positioned at the first attachment edge (63).

7. The separator (3; 103; 203; 303; 403) according to any one of claims 1 to 6, wherein the primary separation stage (31) comprises an inlet diverter (41) interposed between the inlet conduit (10) and the secondary separation stage (32), imparting that at least a part of the flow (F1, F2, F3, F4, F5; F) of lubricant-charged gaseous refrigerant discharged from the inlet conduit (10) has to circumvent said inlet diverter (41) for being admitted into the secondary separation stage (32),
and wherein the inlet diverter (41) preferably comprises an inlet transversal plate (42) positioned proximate to the inlet conduit (10), the inlet transversal plate (42) being perpendicular to the inlet axis (X10) and being crossed by the inlet axis (X10), the inlet transversal plate (42) comprising:
- a second attachment edge (43), in matching contact with the housing (14), and
- a second free edge (44), the second free edge (44) and the housing (14) defining a second passage section (45) for the circumventing part of the flow (F1, F2, F3, F4, F5; F) of lubricant-charged gaseous refrigerant, leading to the secondary separation stage (32);

8. The separator (3; 103; 203; 303; 403) according to claim 7, wherein the inlet transversal plate (42) comprises a second aperture (47), positioned at the second attachment edge (43), and wherein the inlet diverter (41) preferably comprises radial arms (46) parallel to the inlet transversal plate (42) and connecting the second free edge (44) to the housing (14).

9. The separator (3; 103; 203; 303; 403) according to any one of the preceding claims 1 to 8, wherein:
- the housing (14) defines a housing axis (X14), and comprises an axially-extending sidewall (16) extending parallel to the housing axis (X14), a first end wall (17) and a second end wall (18), both crossed by the housing axis (X14), the sidewall (16) comprising an upper portion (22), connecting the first end wall (17) to the second end wall (18), and a lower portion (21), connecting the first end wall (17) to the second end wall (18),
- the inlet conduit (10) is positioned through the first end wall (17), the inlet axis (X10) being coaxial with the housing axis (X14),
- the refrigerant outlet conduit (12) is positioned proximate to the second end wall (18), through the upper portion (22), the outlet axis (R12) being perpendicular with the housing axis (X14),
- the lubricant outlet conduit (11) is positioned through the sidewall (16) of the housing (14),
- the primary separation stage (31) is axially interposed between the inlet conduit (10) and the secondary separation stage (32), and
- the secondary separation stage (32) is axially interposed between the primary separation stage (31) and the refrigerant outlet conduit (12).

10. The separator (3; 103; 203; 303; 403) according to any one of claims 3 to 6, combined with claim 9, wherein the outlet diverter (61) is axially interposed between the secondary separation stage (32) and the refrigerant outlet conduit (12).

11. The separator (3; 103; 203; 303; 403) according to combined claims 4 and 10, wherein the first attachment edge (63) is in matching contact with the upper portion (22) of the sidewall (16), and the first free edge (64) is positioned between the upper portion (22) of the sidewall (16) and the housing axis (X14).

12. The separator (3; 103; 203; 303; 403) according to any one of claims 9 to 11, wherein the separator (3; 103; 203; 303; 403) comprises:
- a first longitudinal separation grid (71), connecting the secondary separation stage (32) to the second end wall (18) and separating the upper portion (22) from the lower portion (21) of the sidewall (16), between the secondary separation stage (32) and the second end wall (18); and/or
- a second longitudinal separation grid (51), connecting the secondary separation stage (32) to the first end wall (17) and separating the upper portion (22) from the lower portion (21) of the sidewall (16), between the secondary separation stage (32) and the first end wall (17).

13. Refrigeration system, comprising:
- the separator (3; 103; 203; 303; 403) according to any one of claims 1 to 12;
- a compressor (1), which is:
∘ connected to the inlet conduit (10) of the separator (3; 103; 203; 303; 403) and providing said inlet conduit (10) with the flow (F1, F2, F3, F4, F5; F) of lubricant-charged gaseous refrigerant,
∘ connected to the lubricant outlet conduit (11) of the separator (3; 103; 203; 303; 403) for receiving lubricant separated from the lubricant-charged gaseous refrigerant,
- a condenser (2), which is connected to the refrigerant outlet conduit (12) of the separator (3; 103; 203; 303; 403) for receiving the purified gaseous refrigerant discharged from the separator (3; 103; 203; 303; 403).

14. Method for separating lubricant from lubricant-charged gaseous refrigerant, wherein the method includes the following steps of:
- admitting a flow (F1, F2, F3, F4, F5; F) of lubricant-charged gaseous refrigerant within the housing (14) of the separator (3; 103; 203; 303; 403) according to any one of claims 1 to 12, through the inlet conduit (10) thereof;
- obtaining purified gaseous refrigerant and separated lubricant, by separating lubricant from the lubricant-charged gaseous refrigerant by means of the primary separation stage (31) and the secondary separation stage (32);
- discharging said purified gaseous refrigerant from the housing (14) through the refrigerant outlet conduit (12) of the separator (3; 103; 203; 303; 403); and
- discharging said lubricant separated from the admitted lubricant-charged gaseous refrigerant.

15. Method according to claim 14, wherein the separator is according to any one of claims 3 to 6, 10 or 11, and wherein the method includes a further step of, by means of the outlet diverter (61) of the separator (3; 103; 203; 303; 403), imparting that at least a part of the lubricant-charged gaseous refrigerant discharged from the secondary separation stage (32) circumvents said outlet diverter (61) for being admitted into the refrigerant outlet conduit (12).
